(19) Europäisches Patentamt
European Patent Office
Office européen des brevets

(11) **EP 3 058 414 B1**

(12) **EUROPÄISCHE PATENTSCHRIFT**

(45) Veröffentlichungstag und Bekanntmachung des Hinweises auf die Patenterteilung:
**04.03.2020 Patentblatt 2020/10**

(51) Int Cl.:
**G02B 21/00** *(2006.01)*    **G02B 27/58** *(2006.01)*
**G06T 1/00** *(2006.01)*

(21) Anmeldenummer: **14783823.9**

(22) Anmeldetag: **10.10.2014**

(86) Internationale Anmeldenummer:
**PCT/EP2014/071776**

(87) Internationale Veröffentlichungsnummer:
**WO 2015/055534 (23.04.2015 Gazette 2015/16)**

(54) **SCANMIKROSKOP UND VERFAHREN ZUM BESTIMMUNG DER PUNKT-SPREIZ-FUNKTION (PSF) EINES SCANMIKROSKOPS**

SCANNING MICROSCOPE AND METHOD FOR DETERMINING THE POINT SPREAD FUNCTION (PSF) OF A SCANNING MICROSCOPE

MICROSCOPE À BALAYAGE ET PROCÉDÉ DE DÉTERMINATION DE LA FONCTION D'ÉTALEMENT PONCTUEL D'UN MICROSCOPE À BALAYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2013   DE 102013017124**

(43) Veröffentlichungstag der Anmeldung:
**24.08.2016   Patentblatt 2016/34**

(73) Patentinhaber: **Carl Zeiss Microscopy GmbH 07745 Jena (DE)**

(72) Erfinder:
• **KLEPPE, Ingo**
  **07749 Jena (DE)**
• **NOVIKAU, Yauheni**
  **07743 Jena (DE)**
• **NETZ, Ralf**
  **07745 Jena (DE)**
• **KIEWEG, Michael**
  **10245 Berlin (DE)**
• **NIETEN, Christoph**
  **07745 Jena (DE)**

(74) Vertreter: **Loritz, Rainer c/o Carl Zeiss AG Carl-Zeiss-Promenade 10 07745 Jena (DE)**

(56) Entgegenhaltungen:
DE-A1-102011 114 500     US-A1- 2010 329 582

• Praveen Pankajakshan ET AL: "Parametric Blind Deconvolution for Confocal Laser Scanning Microscopy (CLSM)-Proof of Concept", , 1. April 2008 (2008-04-01), XP055145348, Gefunden im Internet: URL:http://hal.archives-ouvertes.fr/docs/0 0/27/02/92/PDF/report.pdf [gefunden am 2014-10-09]
• CONCHELLO J-A ET AL: "Parametric blind deconvolution of fluorescence microscopy images: preliminary results", PROCEEDINGS OF SPIE, S P I E - INTERNATIONAL SOCIETY FOR OPTICAL ENGINEERING, US, Bd. 2655, 1. Januar 1996 (1996-01-01), Seiten 164-174, XP002235274, ISSN: 0277-786X, DOI: 10.1117/12.237474
• SPIE, PO BOX 10 BELLINGHAM WA 98227-0010 USA, 31. Dezember 2005 (2005-12-31), XP040196955,
• KUNDUR D ET AL: "BLIND IMAGE DECONVOLUTION", IEEE SIGNAL PROCESSING MAGAZINE, IEEE SERVICE CENTER, PISCATAWAY, NJ, US, Bd. 13, Nr. 3, 1. Mai 1996 (1996-05-01), Seiten 43-64, XP001188901, ISSN: 1053-5888, DOI: 10.1109/79.489268
• BRUNO AMIZIC ET AL: "Sparse Bayesian blind image deconvolution with parameter estimation", EURASIP JOURNAL ON IMAGE AND VIDEO PROCESSING, Bd. 2012, Nr. 1, 1. Januar 2012 (2012-01-01), Seite 20, XP055091242, ISSN: 1687-5281, DOI: 10.1145/1141911.1141956

**Beschreibung**

Die vorliegende Erfindung bezieht sich in einem ersten Aspekt auf ein Verfahren zum Betreiben eines Scanmikroskops und zum Bestimmen von Punktspreizfunktionen, mit welchen mit dem Scanmikroskop Probenbilder aufgenommen werden, nach dem Oberbegriff des Anspruchs 1.

In einem zweiten Gesichtspunkt betrifft die Erfindung ein Scanmikroskop nach dem Oberbegriff des Anspruchs 16.

Ein wichtiges Ziel bei der Untersuchung einer Probe mit einem Scanmikroskop ist die Ermittlung von quantitativen Informationen über die Probe. Dies kann beispielsweise die räumliche Verteilung von Fluoreszenzmolekülen betreffen, insbesondere die Anzahl oder Dichte von Fluoreszenz-Emittern.

Oft wird eine von Fluoreszenzmolekülen oder anderen interessierenden Probenstrukturen ausgehende Lichtintensität gemessen, welche monoton von der gesuchten Anzahl oder Dichte an interessierenden Molekülen abhängt. Ohne weiteres sind hierdurch jedoch nur relative quantitative Aussagen möglich. Das heißt, eine ermittelte Anzahl oder Dichte wird in willkürlichen Einheiten angegeben. Ein quantitativer Vergleich kann daher sinnvoll nur mit Messdaten aus derselben Messung durchgeführt werden.

In der Fluoreszenz-Korrelationsmikroskopie (englisch: fluorescence correlation microscopy, FCS) werden durch eine Korrelations-Analyse Fluktuationen von Fluoreszenz-Intensitäten untersucht. Dadurch ist eine absolut quantitative Auswertung möglich, bei welcher eine Dichte oder Konzentration von interessierenden Substanzen nicht in willkürlichen Einheiten, sondern physikalischen Größen angegeben wird. Für eine verlässliche Dateninterpretation ist jedoch eine genaue Kenntnis des beobachteten Probenvolumens erforderlich, das heißt, desjenigen Probenvolumens, welches zu einem Signal von einem Bildpunkt eines aufgenommenen Probenbilds beiträgt.

Das Probenvolumen kann berechnet werden, wenn die Punktspreizfunktion bekannt ist, mit der die Probenuntersuchung erfolgt. Die Punktspreizfunktion wird auch als Punktantwort oder Punktbildverwaschungsfunktion (englisch: Point Spread Function, PSF) bezeichnet.

Auch bei anderen Auswerteverfahren ist zum Ermitteln von absolut quantitativen Werten die Kenntnis des untersuchten Probenvolumens notwendig, was über die Punktspreizfunktion erfolgen kann.

Die Punktspreizfunktion hängt von sämtlichen Elementen im Strahlengang des Mikroskops ab. Grundsätzlich ist es möglich, eine theoretische PSF durch Kenntnisse über die optischen Parameter der Elemente im Strahlengang zu berechnen. Die tatsächliche PSF kann jedoch von der theoretischen PSF abweichen, beispielsweise durch Herstellungsschwankungen der optischen Elemente, durch Variationen beim Gebrauch der Elemente, durch nicht berücksichtige Abweichungen des verwendeten Immersionsmediums zu einem in der Berechnung verwendeten Immersionsmedium oder durch Abweichungen der Temperatur der optischen Elemente zu einer in der Berechnung angenommenen Temperatur.

Daher können präzisere Ergebnisse erzielt werden, wenn die PSF experimentell ermittelt wird. Hierzu kann insbesondere eine Referenzprobe untersucht werden, welche Objekte, sogenannte Beads, umfasst, die kleiner sind als die Auflösung des Scanmikroskops. Als Auflösung kann die Halbwertsbreite (FWHM, englisch: Full width half maximum) der PSF angesehen werden.

Durch eine solche Referenzmessung kann zwar die PSF für das verwendete Objektiv mit hoher Genauigkeit bestimmt werden. Nicht berücksichtigt werden hierdurch aber mit der eigentlichen Probe verbundene Elemente, beispielsweise das Immersionsmedium und die Temperaturabhängigkeit von dessen Brechungsindex. Diese Temperaturabhängigkeit kann gerade bei Öl als Immersionsmedium groß sein. Auch bleibt eine eventuell abweichende Dicke eines verwendeten Deckglases unberücksichtigt. Dies kann zu einer sphärischen Aberration führen. Eine mögliche Neigung des Deckglases kann zu Astigmatismus und Koma der PSF führen.

Der Fehler einer berechneten PSF oder einer in einer Referenzmessung ermittelten PSF zu der tatsächlichen PSF für die Untersuchung der eigentlichen Probe kann insbesondere in Höhenrichtung groß sein. Die Höhenrichtung soll die Richtung der optischen Achse, welche von einem Objektiv zur Probe verläuft, bezeichnen. Das mit einem Detektorelement untersuchte Probenvolumen kann dadurch um einen Faktor 2 oder mehr von einem berechneten Volumen abweichen.

Aus diesen Gründen ist es vorteilhaft, wenn die PSF nicht aus einer Referenzmessung, sondern experimentell an der eigentlichen Probe bestimmt wird.

Auf diesem Gedanken beruhen gattungsgemäße Verfahren zum Betreiben eines Scanmikroskops und zum Bestimmen von Punktspreizfunktionen, mit welchen mit dem Scanmikroskop Probenbilder aufgenommen werden. Bei einem solchen Verfahren ist vorgesehen, dass eine Probe mit mindestens einem Beleuchtungslichtstrahl abgetastet wird, dass während dem Abtasten durch den Beleuchtungslichtstrahl mit einer Detektoreinrichtung des Scanmikroskops mindestens ein Probenbild aufgenommen wird, und dass aus dem mindestens einen Probenbild die Punktspreizfunktion berechnet wird, mit welcher durch das Scanmikroskop ein Probenbild aufgenommen wird.

Ein gattungsgemäßes Scanmikroskop umfasst eine Lichtquelleneinrichtung zum Aussenden von mindestens einem Beleuchtungslichtstrahl, eine Scaneinrichtung zum Erzeugen einer Abtastbewegung des mindestens einen Beleuchtungslichtstrahls über eine Probe, eine Detektoreinrichtung zum Aufnehmen von mindestens einem Probenbild während dem Abtasten durch den Beleuchtungslichtstrahl, und elektronische Steuer- und Auswertemittel, die dazu eingerichtet sind, aus dem mindestens einen Probenbild eine Punktspreizfunktion zu berechnen, mit welcher ein Probenbild aufgenommen wird.

Bei einem bekannten Verfahren werden Referenzobjekte, beispielsweise Kügelchen, die kleiner als die Mikroskopauflösung sind, der Probe hinzuzugeben. Aus den Detektorsignalen zu diesen Referenzobjekten kann die PSF zu einem Probenbild bestimmt werden. Nachteilig hieran ist der höhere Aufwand der Probenpräparation.

DE 10 2011 114 500 A1 beschreibt ein Scanmikroskop, dessen Detektor Empfangselemente umfasst, deren Abstand zueinander kleiner ist als eine Beugungsscheibe, welche ein Probenpunkt auf dem Detektor erzeugt. US 2010/329582 A1 beschreibt ein Verfahren zur Berechnung der PSF einer bewegten Kamera. Weitere Berechnungsverfahren für Punkt-Spreiz-Funktionen sind beispielsweise bekannt aus Parametric blind deconvolution of fluorescence microscopy images: preliminary results" von Conchello J, et al; veröffentlicht in Proceedings of SPIE, 1. Januar 1996, Bd. 2655, und in Parametric Blind Deconvolution for Confocal Laser Scanning Microscopy (CLSM)-Proof of Concept" von Praveen Pankajakshan et al.

Als eine **Aufgabe** der Erfindung kann angesehen werden, ein Scanmikroskop und ein Verfahren anzugeben, durch welche eine Bestimmung der Punktspreizfunktionen möglich ist, mit welchen mit dem Scanmikroskop Probenbilder aufgenommen werden, ohne dass einem Mikroskopbenutzer ein hoher Vorbereitungsaufwand abverlangt wird.

Diese Aufgabe wird durch das Verfahren mit den Merkmalen des Anspruchs 1 und durch das Scanmikroskop mit den Merkmalen des Anspruchs 16 gelöst.

Vorteilhafte Varianten des erfindungsgemäßen Verfahrens und des erfindungsgemäßen Scanmikroskops sind Gegenstand der abhängigen Ansprüche und werden außerdem in der folgenden Beschreibung erläutert.

Bei dem Verfahren der oben genannten Art wird erfindungsgemäß eine Detektoreinrichtung mit Empfangselementen verwendet, wobei der Abstand benachbarter Detektorelemente kleiner ist als eine Beugungsscheibe, welche ein Probenpunkt auf der Detektoreinrichtung erzeugt. Es ist gemäß der Erfindung vorgesehen, dass über die Empfangselemente erzeugte Detektorsignale jeweils für verschiedene Positionen des Beleuchtungslichtstrahls auf der Probe ausgelesen werden, womit über die Abtastung der Probe die ausgelesenen Detektorsignale mehrere Probenbilder ergeben. Dabei sind die Punktspreizfunktionen zu den verschiedenen Detektorsignalen jeweils über eine Beleuchtungs-Punktspreizfunktion und eine Detektions-Punktspreizfunktion definiert. Es wird zu allen Detektorsignalen eine übereinstimmende Beleuchtungs-Punktspreizfunktion angenommen, die gemäß der Abtastbewegung für verschiedene Detektorsignale verschoben ist. Zudem wird zu allen Detektorsignalen eine übereinstimmende Detektions-Punktspreizfunktion angenommen, in welcher ein räumlicher Versatz zwischen den Detektorelementen berücksichtigt wird. Weiterhin werden mit den mehreren Probenbildern die Beleuchtungs-Punktspreizfunktion und die Detektions-Punktspreizfunktion berechnet und mit diesen die Punktspreizfunktionen zu den verschiedenen Detektorsignalen berechnet.

Bei dem Scanmikroskop der oben genannten Art ist erfindungsgemäß vorgesehen, dass die Detektoreinrichtung Empfangselemente hat, deren Abstand zueinander kleiner ist als eine Beugungsscheibe, welche ein Probenpunkt auf der Detektoreinrichtung erzeugt, dass die elektronischen Steuer- und Auswertemitteln außerdem dazu eingerichtet sind, über die Empfangselemente erzeugte Detektorsignale jeweils für verschiedene Positionen des Beleuchtungslichtstrahls auf der Probe auszulesen, womit über die Abtastung der Probe die ausgelesenen Detektorsignale mehrere Probenbilder ergeben. Dabei sind die Punktspreizfunktionen zu den verschiedenen Detektorsignalen jeweils über eine Beleuchtungs-Punktspreizfunktion und eine Detektions-Punktspreizfunktion definiert. Weiterhin sind die elektronischen Steuer- und Auswertemitteln dazu eingerichtet, mit den mehreren Probenbildern eine Beleuchtungs-Punktspreizfunktion und eine Detektions-Punktspreizfunktion zu berechnen und mit diesen die Punktspreizfunktionen zu den verschiedenen Detektorsignalen zu berechnen, unter den Annahmen, dass zu allen Detektorsignalen eine übereinstimmende Beleuchtungs-Punktspreizfunktion vorliegt, die gemäß der Abtastbewegung bei verschiedenen Detektorsignalen verschoben ist, und dass zu allen Detektorsignalen eine übereinstimmende Detektions-Punktspreizfunktion vorliegt, in welcher ein räumlicher Versatz zwischen den Detektorelementen berücksichtigt wird.

Die Erfindung beruht insbesondere auf der Erkenntnis, dass bei einer sogenannten Sub-Airy-Abtastung der Probe Messinformationen erzeugt werden, die eine präzise Berechnung der PSF erlauben. Für diese Berechnung werden Kenntnisse über die PSF bei einer Sub-Airy-Abtastung genutzt, insbesondere in welcher Weise die PSF aus der Beleuchtungs-PSF und der Detektions-PSF gebildet wird. Der grundlegende Gedanke wird im Folgenden näher erläutert.

Bei einer einfachen nicht erfindungsgemäßen Messung, mit der ein einzelnes Probenbild aufgenommen wird, kann die PSF aus den aufgenommenen Bilddaten nicht sicher berechnet werden. Eine solche Berechnung enthält zu viele unbekannte Variablen, wodurch die Berechnung unterbestimmt ist.

Werden mehrere gleichartige Probenbilder aufgenommen, ändert sich daran nichts.

Zusätzliche Informationen, die zur Berechnung der PSF hilfreich sind, werden aber erlangt, wenn mehrere Probenbilder mit verschiedener PSF aufgenommen werden und die Änderung der PSF zwischen den Probenbildern bekannt ist. Gerade dies kann bei der von der Erfindung genutzten Sub-Airy-Abtastung erreicht werden.

Die Grundlagen der Sub-Airy-Abtastung gehen auf Sheppard et al., Optik 80, No. 2, 53 (1982) zurück. Bei der Erfindung können zur Sub-Airy-Abtastung Detektorelemente genutzt werden, deren Abstand zueinander kleiner als 1 Airy ist. Dabei kennzeichnet ein Airy die Größe eines Beugungsscheibchens, das ein Punkt in der untersuchten Probenebene auf der Detektoreinrichtung erzeugt. Für eine bestimmte Position des Beleuchtungslichtstrahls werden mehrere, insbesondere alle, Detektorelemente ausgelesen. Für eine nächste Position des Beleuchtungslichtstrahls werden erneut die Detektorelemente ausgelesen. Die so erzeugten Detektorsignale von ein und demselben Detektorelement werden nicht etwa zusammenaddiert. Zwar ist die Detektions-PSF, welche bestimmt, aus welchem Probenbereich dieses Detektorelement Licht empfängt, für alle Detektorsignale dieses Detektorelements gleich. Jedoch ändert sich hierbei die Beleuchtungs-PSF, indem der Beleuchtungslichtstrahl über die Probe geführt wird. Der Probenpunkt, aus dem das betrachtete Detektorelement hauptsächlich Licht empfängt, hängt von der PSF oder Gesamt-PSF ab, welche ein Produkt der Beleuchtungs-PSF und der Detektions-PSF ist. Durch Verschieben der Beleuchtungs-PSF werden mit einem einzelnen Detektorelement daher nacheinander verschiedene Probenpunkte untersucht. Ist der Abtastvorgang abgeschlossen, hat jedes Detektorelement somit einen bestimmten Probenbereich untersucht. Die nacheinander aufgenommenen Detektorsignale von einem Detektorelement können als ein Probenbild aufgefasst werden. Daher wird über eine Abtastung eine Anzahl an Probenbildern aufgenommen, die der Anzahl an Detektorelementen entsprechen kann. Die von verschiedenen Detektorelementen untersuchten Probenbereiche überlappen einander stark. Durch Verrechnen dieser Probenbilder kann ein Gesamtbild berechnet werden, das eine höhere Auflösung oder Bildqualität hat als die einzelnen Probenbilder.

Ein Kerngedanke der Erfindung kann nun darin gesehen werden, dass Wissen über die PSF und die Änderung der PSF während dem Abtasten genutzt wird.

So ist zwar die PSF für jedes der im Rahmen der Erfindung aufgenommenen Probenbilder unterschiedlich. Es liegen aber präzise Informationen zu diesem Unterschied vor. So beruhen alle Detektorsignale auf einer übereinstimmenden Beleuchtungs-PSF, deren einziger Unterschied in einer Verschiebung der Beleuchtungs-PSF liegt. Diese Verschiebung beruht auf der Abtastbewegung des Beleuchtungslichtstrahls. Form und Größe der Beleuchtungs-PSF bleiben hingegen unverändert. Da die Abtastbewegung durch die Ansteuerung der Scaneinrichtung vorgegeben ist, ist sie mit hoher Genauigkeit bekannt. Daher ist die Verschiebung der Beleuchtungs-PSF ebenfalls mit hoher Präzision bekannt.

Die Detektions-Punktspreizfunktionen für die nacheinander aufgenommenen Detektorsignale desselben Detektorelements sind identisch. Für Detektorsignale verschiedener Detektorelemente unterscheiden sie sich allein in einer Verschiebung. Diese Verschiebungen entsprechen den Abständen zwischen den verschiedenen Detektorelementen. Die Abstände können bekannt sein oder auch experimentell ermittelt werden, wie es zu einer späteren Variante beschrieben wird.

Eine Sub-Airy-Abtastung liefert somit mehrere Probenbilder, deren Punktspreizfunktionen allein durch zwei Unbekannte bestimmt sind, nämlich genau eine Beleuchtungs-PSF und genau eine Detektions-PSF.

Wie beschrieben, enthält durch die Verschiebungen oder den Versatz der Beleuchtungs- und der Detektions-PSF jedes Probenbild dennoch unterschiedliche Informationen. Es kann also eine große Anzahl an Probenbildern mit verschiedener PSF aufgenommen werden, ohne dass die Anzahl unbekannter Variablen zunimmt. Dadurch können genügend Probenbilder aufgezeichnet werden, damit eine Berechnung der Punktspreizfunktionen der verschiedenen Probenbilder überbestimmt ist. Das heißt, es liegen mehr Informationen als zwingend notwendig vor, um eine eindeutige Lösung der Berechnung der Punktspreizfunktionen zu finden.

Vorteilhafterweise steigt hierbei nicht der Aufwand für einen Benutzer. Es kann grundsätzlich bereits eine Abtastung der Probe genügen. Die mehreren Probenbilder werden ohnehin bei einer Sub-Airy-Abtastung aufgenommen. Somit werden keine zusätzlichen Probenmessungen benötigt, um die PSFs zu berechnen. Weiterhin ist auch keine spezielle Probenpräparation erforderlich, insbesondere ist keine Zugabe von Kügelchen mit Sub-Airy-Größe notwendig.

Die vorgenannten mehreren Probenbilder werden vorzugsweise zu einem Gesamtbild verrechnet, womit dieses gegenüber einem der Probenbilder eine höhere Auflösung hat. Prinzipiell kann zwar das Gesamtbild als Mittelung der Probenbilder berechnet werden. Vorzugsweise wird aber ein Gesamtbild zusammen mit dem Berechnen der Punktspreizfunktionen aus den Probenbildern berechnet. Die Punktspreizfunktion fließt also in die Berechnung des Gesamtbilds mit ein. In der Berechnung können die PSF und das Gesamtbild zwei zu bestimmende Funktionen in einer gemeinsamen Gleichung sein, das heißt, sie werden zusammen berechnet.

Die oberen Schilderungen werden im Folgenden mathematisch für ein Ausführungsbeispiel veranschaulicht.

Während einer Abtastung werden bei der Erfindung n Probenbilder aufgenommen. Ein Probenbild kann insbesondere die von ein und demselben Detektorelement nacheinander aufgenommenen Detektorsignale umfassen. Es ist aber grundsätzlich auch möglich, die Detektorsignale in anderer Weise zu Probenbildern zusammenzusetzen und aus diesen anschließend ein Gesamtbild und die PSFs zu berechnen.

Die von den Detektorelementen empfangenen Signale können als $k = k(\mathbf{s},\mathbf{r})$ gekennzeichnet werden. Dabei bezeichnet $\mathbf{r}$ die Scanposition, das heißt die mittlere Position eines Beleuchtungsflecks in der Probenebene und ist ein Vektor mit Werten in den drei Raumrichtungen x,y,z.

Mit s wird die durch die jeweilige Position eines Detektorelements in der Ebene der Detektoreinrichtung bedingte Verschiebung dargestellt, die gegenüber der Scanposition vorliegt. Somit ist $\mathbf{s}$ ebenfalls ein Vektor mit Werten in den drei Raumrichtungen $s_x, s_y, s_z$.

Es gibt n verschiedene Detektorelemente, die sich jeweils in ihrem Wert von $\mathbf{s}$ unterscheiden. Während einem Abtastvorgang durchläuft r verschiedene Werte, für welche die n Detektorelemente jeweils ein Signal k aufnehmen.

Ein Detektorsignal k($\mathbf{s}$,r) kann nun beschrieben werden durch:

$$k(\mathbf{s},r) = (p \times PSF)(\mathbf{s},r) \qquad \text{Formel (1)}$$

Hierbei kennzeichnet p die Probe und gibt an, wie stark verschiedene Probenpunkte bei Beleuchtung Probenlicht in Richtung der Detektoreinrichtung zurückwerfen. Je nach Messweise kann p durch die Reflektivität, die Streuung, die Art und Dichte von Fluorophoren oder auch durch andere Probeneigenschaften bestimmt sein. Beispielsweise kann p die ortsabhängige Dichte eines Fluorophors angeben. Die Bestimmung von p stellt die Berechnung des Gesamtbilds dar.

In der obigen Formel ist die PSF für die Messung des Werts k($\mathbf{s}$,r) mit PSF gekennzeichnet und $\times$ gibt die Faltung von p mit PSF an. Gemäß der obigen Formal ist das Ergebnis der Faltung abhängig von den Variablen ($\mathbf{s}$,r). Weil p und die Punktspreizfunktionen PSF in einem Gleichungssystem verknüpft sind, wird das Gesamtbild zusammen mit den PSF berechnet.

Die Faltung zweier Funktionen p und PSF ist allgemein definiert durch:

$$(p \times PSF)(\mathbf{r}) := \int p(\mathbf{r}')\, PSF(\mathbf{r} - \mathbf{r}')d\mathbf{r}' \qquad \text{Formel (2)}$$

Die PSF kann dargestellt werden durch eine Multiplikation einer Beleuchtungs-Punktspreizfunktion $PSF_{exc}$ mit einer Detektions-Punktspreizfunktion $PSF_{Det}$.

Nun wird das Wissen genutzt, dass sich in der Detektions-Punktspreizfunktion für verschiedene Detektorelemente allein eine Verschiebung ändert, welche der Relativlage verschiedener Detektorelemente zueinander entspricht und durch s angegeben wird:

$$PSF(\mathbf{s},\mathbf{r}) := PSF_{exc}(\mathbf{r})\, PSF_{det}(\mathbf{r+s}) \qquad \text{Formel (3)}$$

Mit den Formeln (1) und (2) ergibt sich damit:

$$k(\mathbf{s},\mathbf{r}) = \int p(\mathbf{r}')\, PSFexc(\mathbf{r} - \mathbf{r}')PSFdet(\mathbf{r} + \mathbf{s} - \mathbf{r}')d\mathbf{r}' \qquad \text{Formel (3')}$$

Üblicherweise befinden sich die Detektorelemente in einer Ebene, so dass die PSF für unterschiedliche $\mathbf{s}$ keinen Unterschied in z-Richtung aufweist, siehe obige Formel. Allgemein kann aber auch eine gekrümmte Detektorfläche verwendet werden, womit eine z-Abhängigkeit hinzukommt. Im Ergebnis unterscheidet sich daher die $PSF_{det}$ für verschiedene Detektorelemente in dem Ort der untersuchten Probenfläche oder -ebene. Hier liegt eine Verschiebung $s_x$, $s_y$ und gegebenenfalls $s_z$ vor, welche für die Detektorsignale verschiedener Detektorelemente unterschiedlich sind und für die mehreren Detektorsignale von ein und demselben Detektorelement gleich sind.

Nach einem Auslesevorgang der Messsignale k zu einem bestimmten Wertetripel von $\mathbf{r}$ wird die Position $\mathbf{r}$ des Beleuchtungslichtstrahls in der Probenebene geändert. Sodann wird ein weiterer Satz an Messsignalen k aufgenommen und ausgelesen.

Ist der Abtastvorgang abgeschlossen, werden die Messsignale zu n Probenbildern zusammengefügt. Die Punktspreizfunktionen zu verschiedenen Probenbildern, deren Messwerte sich in $\mathbf{r}$ und/oder in $\mathbf{s}$ unterscheidenden, können durch eine einzige PSF dargestellt werden, wie in den obigen Formeln. In dieser Darstellung hängt die eine PSF von $\mathbf{r}$ und $\mathbf{s}$ ab. Hiermit gleichbedeutend ist eine Darstellung durch mehrere PSF, die als Indizes oder Parameter r und s umfassen. Dies kann auch als Matrixdarstellung der PSF bezeichnet werden.

So wird im Rahmen der Erfindung gleichbedeutend von genau einer PSF für die verschiedenen Probenbilder gesprochen, welche sich für diese unterscheidet, oder von mehreren unterschiedlichen PSF für verschiedene Probenbilder. Relevant ist in beiden Fällen, dass die eine PSF oder die mehreren PSF für verschiedene Probenbilder allein eine Verschiebung $\mathbf{s}$ sowie eine Verschiebung $\mathbf{r}$ der Beleuchtungs-PSF, aber keine sonstigen Unterschiede aufweisen.

Die oberen Formeln (3), (3') können auch als eine Abtastung der Beleuchtungs-Punktspreizfunktion $PSF_{exc}$ mit Hilfe der Detektions-Punktspreizfunktion $PSF_{Det}$ an n Stützstellen verstanden werden. Dabei ist die Lage der Stützstellen durch die Positionen der Detektorelemente bekannt. Weil die Anzahl an Detektorelementen und somit der aufgenommenen Probenbilder n groß sein kann, entspricht dies einer großen Anzahl an Stützstellen. Daher ist eine präzise Berechnung der Unbekannten in Formel (3') möglich. Hierin wird k durch die Messung erhalten und **s** kann bekannt sein. Unbekannt und zu berechnen sind demnach die Probeninformationen p und die Beleuchtungs- und Detektions-Punktspreizfunktionen $PSF_{exc}$ und $PSF_{det}$.

Mit Formel (1) kann nachvollzogen werden, dass diese Berechnungen umso genauer möglich sind, je größer der Unterschied in der PSF für verschiedene (**r,s**) ist. Wären die PSF(**r,s**) für verschiedene (**r,s**) identisch, so läge bloß eine Messwiederholung vor, die allein ein verbessertes Signal-zu-Rausch-Verhältnis liefert, nicht aber einen nennenswerten Informationsgewinn zur Berechnung der Punktspreizfunktionen. Sind hingegen die PSF stark unterschiedlich für verschiedene (**r,s**), so können n verschiedene Gleichungen erhalten werden, aus denen jeweils dasselbe p und dieselben Beleuchtungs- und Detektions-Punktspreizfunktionen berechnet werden können.

Diese Berechnung kann iterativ oder numerisch erfolgen, insbesondere indem ein Extremum, also ein Minimum oder Maximum, einer bestimmten Funktion bestimmt wird. Im Folgenden wird eine Darstellung von mehreren PSF gewählt, die anstelle von Variablen (**r,s**) Parameter r und s umfassen, welche in der unteren Formel zu einem einzigen Index zusammengefasst sind.

Als zu minimierende Funktion kann bei der multiframe blind deconvolution allgemein die folgende Funktion gewählt werden:

$$\sum_{i=1}^{n} \left\| k_i - p \times PSF_i \right\|^2 + \sum_{r \neq s}^{n} \left\| k_r \times PSF_s - k_s \times PSF_r \right\|^2 \qquad \text{Formel (4)}$$

Bei einer nicht erfindungsgemäßen Messung wären die $PSF_i$ unabhängig voneinander, es lägen also n voneinander unabhängige Punktspreizfunktionen vor. Damit existierten nicht genügend Informationen für eine eindeutige Minimierung der obigen Funktion. Mit Hilfe von zusätzlich angenommenen Eigenschaften kann zwar auch dann eine stabile und in der Regel sinnvolle Lösung berechnet werden. Durch die erfindungsgemäße Messung sind aber nur wenige Ausdrücke unbekannt, so dass die Probe p und die Beleuchtungs- und Detektions-Punktspreizfunktionen präzise und stabil berechnet werden können.

Auch ein anderer Ausdruck als der von Formel (4) kann verwendet werden, um aus den Messdaten die vorgenannten Unbekannten zu bestimmen. Die oben genannte multiframe blind deconvolution ist beispielsweise von Sroubek et al. in Journal of Physics, Conference Series 124 (2008) beschrieben. Bekannt ist ihre Verwendung bei der Verrechnung von mehreren Fotos eines Fotoapparats. Bei diesen Fotos unterscheiden sich die Punktspreizfunktionen durch zufällige Schwankungen von beispielsweise der Luftdichte zwischen Kamera und fotografiertem Objekt, während die optischen Elemente der Kamera für die mehreren Fotos unverändert sind und somit keinen Unterschied in den Punktspreizfunktionen erzeugen.

Allgemeiner ausgedrückt erfolgt die Berechnung der Beleuchtungs-Punktspreizfunktion und der Detektions-Punktspreizfunktion bevorzugt dadurch, dass eine Fitfunktion iterativ angepasst wird, wobei die Fitfunktion einen Zusammenhang der aufgenommenen Probenbilder zu zumindest der Beleuchtungs-Punktspreizfunktion, zu der Detektions-Punktspreizfunktion, zu dem jeweiligen Versatz zwischen der Beleuchtungs-Punktspreizfunktion und der Detektions-Punktspreizfunktion für die verschiedenen Detektorsignale, und zu einer Probenfunktion p beschreibt, welche ortsaufgelöst die Probe darstellt.

Die Probenfunktion kann beispielsweise für jeden x,y,z-Punkt der Probe einen Parameter, also einen Wert, umfassen, welcher durch die Berechnung bestimmt werden soll. Damit stellt die Probenfunktion das zu ermittelnde Gesamtbild dar.

Unter einer Fitfunktion ist eine mathematische Funktion zu verstehen, welche Parameter enthält, deren Werte von Startwerten ausgehend so verändert werden, dass die Fitfunktion mit Messdaten möglichst genau übereinstimmt.

Die Fitfunktion kann insbesondere einen iterativ anzupassenden Ausdruck, der die Beleuchtungs-Punktspreizfunktion beschreibt, und einen iterativ anzupassenden Ausdruck, der die Detektions-Punktspreizfunktion beschreibt, umfassen.

Diese beiden iterativ anzupassenden Ausdrücke können jeweils mit Zernike-Polynomen gebildet sein. Durch Zernike-Polynome kann leicht auf Abbildungsfehler geschlossen werden und dadurch auf Fehler im Versuchsaufbau, beispielsweise eine Verkippung des Deckglases der Probe. Gerade Zernike-Polynome können dargestellt werden als

$$Z_n^m(\rho, \phi) = R_n^m(\rho) \quad \text{und ungerade Zernike-Polynome als} \quad Z_n^{-m}(\rho, \phi) = R_n^m(\rho) \sin(m\phi), \text{wo-}$$

bei m und n, nichtnegative ganze Zahlen sind, n größer oder gleich m ist, $\phi$ der azimutale Winkel und p der normierte radiale Abstand ist.

Eine iterative Berechnung ist umso schneller und weniger fehleranfällig, je näher die Startwerte der iterativ zu bestimmenden Parameter an den durch die iterative Berechnung ermittelten Werten liegt. Daher werden vorzugsweise als Startwerte für die beiden iterativ anzupassenden Ausdrücke eine theoretische Beleuchtungs-Punktspreizfunktion und eine theoretische Detektions-Punktspreizfunktion verwendet, welche vorab mit gegebenen Informationen zu optischen Abbildungsmitteln des Scanmikroskops bestimmt wurden. Diese Bestimmung der theoretischen Beleuchtungs- und Detektions-PSF kann eine Simulation oder eine analytische oder iterative Berechnung umfassen.

Werden eine theoretische Beleuchtungs-Punktspreizfunktion und eine theoretische Detektions-Punktspreizfunktion mit Hilfe von gegebenen Informationen zu optischen Abbildungsmitteln des Scanmikroskops bestimmt, so können anschließend Abweichungen zwischen der theoretischen Beleuchtungs-Punktspreizfunktion und der berechneten Beleuchtungs-Punktspreizfunktion sowie zwischen der theoretischen Detektions-Punktspreizfunktion und der berechneten Detektions-Punktspreizfunktion ermittelt werden. Auf Grundlage der ermittelten Abweichungen können Abbildungsfehler identifiziert werden. Hierfür ist die Darstellung der zu berechnenden Beleuchtungs- und Detektions-PSF durch Zernike-Polynome besonders vorteilhaft. Aus diesen können leicht sphärische Aberration, Koma oder Astigmatismus abgelesen werden, welche wiederum auf Fehler des Mikroskopbenutzers hinweisen können, etwa bezüglich der Handhabung des Immersionsmediums oder des Deckglases.

In einem elektronischen Speicher können Benutzeranweisungen zur Handhabung von Elementen des Scanmikroskops, auf die das Beleuchtungslicht oder von der Probe ausgehendes Probenlicht trifft, gespeichert sein, sowie eine Zuordnung der Benutzeranweisungen zu verschiedenen Abbildungsfehlern. Mit elektronischen Auswertemitteln kann sodann abhängig von identifizierten Abbildungsfehlern zugehörige Benutzeranweisungen ausgewählt und einem Benutzer ausgegeben werden. Diese Anweisungen können etwa eine Ausrichtung des Deckglases oder eine Verwendung des Immersionsmediums betreffen.

Vorzugsweise ist eine adaptive Optik vorhanden, mit der Abbildungsfehler des Scanmikroskops korrigierbar sind. Die adaptive Optik kann beispielsweise einen oder mehrere verstellbare Spiegel oder Linsen umfassen. Grundsätzlich kann die adaptive Optik manuell zu betätigen sein. Vorzugsweise wird aber mit elektronischen Steuer- und Auswertemitteln abhängig von den identifizierten Abbildungsfehlern die adaptive Optik zum Reduzieren von Abbildungsfehlern des Scanmikroskops verstellt.

Grundsätzlich kann die Erfindung dazu verwendet werden, die PSF für zwei Dimensionen, insbesondere für die beiden Lateralrichtungen, die quer zur optischen Achse vom Objektiv zum Probe stehen, zu ermitteln und damit das Gesamtbild zu berechnen. In diesem Fall kann das Gesamtbild mit einer gegenüber herkömmlichen Verfahren besseren Auflösung oder Bildqualität berechnet werden, genaue Kenntnisse über das untersuchte Probenvolumen ergeben sich aber nicht.

Vorzugsweise wird daher zum Ermitteln einer Höhenabhängigkeit der Punktspreizfunktionen eine weitere Mehrzahl an Probenbildern aufgenommen und daraus mindestens ein weiteres Gesamtbild berechnet, wobei sich die Messungen zu den verschiedenen Gesamtbildern in einem Höhenversatz zwischen der Beleuchtungs-Punktspreizfunktion und der Detektions-Punktspreizfunktion unterscheiden. Aus den mehreren Gesamtbildern kann sodann die Höhenabhängigkeit der Punktspreizfunktionen berechnet werden. Hierbei kann bereits mit zwei Gesamtbildern eine große Verbesserung in der Bestimmung der Höhenabhängigkeit der Punktspreizfunktionen erreicht werden.

Der genannte Höhenversatz kann beispielsweise erreicht werden, indem nach dem Aufnehmen der Probenbilder für ein erstes Gesamtbild eine Relativhöhenverstellung zwischen dem Fokus des Beleuchtungslichts und der Probe oder zwischen der Probe und einer Untersuchungsebene, welche scharf auf die Detektoreinrichtung abgebildet wird, durchgeführt wird. Anschließend wird die Probe erneut mit mindestens einem Beleuchtungslichtstrahl abgetastet und dabei werden wiederum mehrere Probenbilder aufgenommen und zu einem zweiten Gesamtbild verrechnet. Diese Änderung des Fokus kann durch Verstellen einer optischen Komponente erfolgen, auf die entweder Beleuchtungslicht oder Probenlicht, nicht aber sowohl Beleuchtungs- als auch Probenlicht, trifft.

Bei einer bevorzugten Alternative werden die Probenbilder für die verschiedenen Gesamtbilder aufgenommen, ohne dass hierbei eine Höhenverstellung der Probe, einer Lichtquelleneinrichtung, welche das Beleuchtungslicht aussendet, oder der Detektoreinrichtung erfolgt. Dazu kann die Lichtquelleneinrichtung mindestens zwei Lichtquelleneinheiten aufweisen, die in Ebenen angeordnet sind, welche zu verschiedenen Probenebenen optisch konjugiert sind. Alternativ oder zusätzlich kann hierzu die Detektoreinrichtung zwei Detektorbereiche umfassen, auf welche zwei verschiedene Probenebenen abgebildet werden. Im letzteren Fall unterscheiden sich die von den beiden Detektorbereichen aufgenommenen Detektorsignale in einem Höhenversatz ihrer Detektions-PSF. Als verschiedene Detektorbereiche können unterschiedliche Kameras oder nebeneinanderliegende Detektorelemente ein und desselben Kamerachips verwendet werden.

Im davor genannten Fall mit zwei Lichtquelleneinheiten wird durch Verwenden der ersten oder zweiten Lichtquelleneinheit zwischen zwei Beleuchtungs-PSF gewechselt, die sich durch einen Höhenversatz unterscheiden, im Übrigen aber identisch sein können. Die beiden Lichtquelleneinheiten können nacheinander Beleuchtungslicht aussenden, wobei mit ein und derselben Kamera der Detektoreinrichtung die für die beiden Gesamtbilder erforderlichen Probenbilder aufgenommen werden. Die Lichtquelleneinheiten können aber auch gleichzeitig Beleuchtungslichtstrahlen aussenden, wenn diese unterscheidbar sind, etwa durch ihre Polarisation oder Wellenlänge. Dadurch kann Probenlicht ebenfalls unterschieden und beispielsweise abhängig von seiner Polarisation oder Wellenlänge auf einen bestimmten von Detektorbereichen geleitet werden.

Insbesondere wenn zwei Detektorbereiche zum Aufnehmen der den zwei Gesamtbildern zugrunde liegenden Probenbildern genutzt werden, können vorteilhafterweise die Probenbilder für ein erstes Gesamtbild gleichzeitig zu den Probenbildern für ein zweites Gesamtbild aufgenommen werden. Damit ist ein Geschwindigkeitsvorteil verbunden.

Bevorzugt ist die Erzeugung eines mehrfarbigen Bilds. Dieses kann aus mehreren Gesamtbildern zusammengesetzt werden, wenn für diese ein Abtasten der Probe mit Beleuchtungslicht verschiedener Wellenlängenbereiche durchgeführt wird und/oder mit der Detektoreinrichtung von der Probe ausgehendes Probenlicht verschiedener Wellenlängenbereiche gemessen wird. Die beobachtbaren Strukturen der Probe können sich abhängig von der Wellenlänge des Lichts stark unterscheiden, so dass mit einem mehrfarbigen Bild ein großer Informationsgewinn verbunden ist. Günstigerweise weisen die Beleuchtungs-PSF und die Detektions-PSF aber keine starke Abhängigkeit von der Wellenlänge auf. Bevorzugt wird daher der zu berechnenden Beleuchtungs-Punktspreizfunktion und/oder der zu berechnenden Detektions-Punktspreizfunktion ein Parameter zur Beschreibung der Wellenlängenabhängigkeit der Beleuchtungs-Punktspreizfunktion und/oder Detektions-der Punktspreizfunktion hinzugefügt. Der Wert dieses Parameters kann vorgegeben sein, da die Wellenlängenabhängigkeit von optischen Elementen in der Regel weitgehend bekannt ist. Alternativ kann ein Wert des Parameters im Rahmen der oben beschriebenen iterativen oder analytischen Berechnung ermittelt werden.

Fest vorgegeben kann auch ein Wert für den Abstand, das heißt die Relativpositionen, der Detektorelemente zueinander sein. In den oben wiedergegebenen Formeln sind damit $\Delta x_i$, $\Delta y_i$ fest vorgegeben. Dies ist vorteilhaft, um die Anzahl unbekannter und zu bestimmender Parameter gering zu halten. Alternativ kann die verwendete Fitfunktion aber auch anzupassende Parameter enthalten, welche die Anordnung der Detektorelemente zueinander beschreiben. Durch Bestimmung dieser Anordnung können insbesondere eine Bildvergrößerung, mit welcher eine Probenebene auf die Detektoreinrichtung abgebildet wird, und/oder eine Orientierung der Detektoreinrichtung relativ zur Abtastrichtung des Beleuchtungslichts ermittelt werden. Diese Werte lassen sich wiederum für die Berechnung des Gesamtbilds oder für die Einstellung, insbesondere Positionierung, der optischen Elemente des Scanmikroskops verwenden. Die Anordnung der Detektorelemente zueinander muss nicht fest vorgegeben werden, da durch die Aufnahme einer verhältnismäßig großen Anzahl an Probenbildern mit jeweils anderer PSF weiterhin eine Überbestimmtheit der zu lösenden Gleichungen vorliegt.

In der Vorgabe Funktionen und/oder der Startwerte einer iterativen Anpassung der Beleuchtungs-PSF und der Detektions-PSF kann genutzt werden, dass der Beleuchtungsstrahlengang und der Detektionsstrahlengang großteils über dieselben Elemente verlaufen. Bei Fluoreszenzmessungen liegt der hauptsächliche Unterschied in den verschiedenen Wellenlängen des Beleuchtungs- und Probenlichts. Dieser Unterschied kann für die Vorgaben zur Beleuchtungs-PSF und Detektions-PSF genutzt werden.

Vorzugsweise ist für die Sub-Airy-Abtastung der Erfindung vorgesehen, dass von einem Auslesen der Detektorelemente bis zu einem nächsten Auslesen der Detektorelemente der Beleuchtungslichtstrahl um eine Strecke in einer Probenebene bewegt wird, welche kleiner ist als die Größe einer Beugungsscheibe, die ein Lichtquellenpunkt in der Probenebene erzeugt. Dabei kann der Beleuchtungslichtstrahl kontinuierlich oder schrittweise mit der Scaneinrichtung bewegt werden.

Die Lichtquelleneinrichtung zum Erzeugen des Beleuchtungslichtstrahls kann eine oder mehrere Lichtquelleneinheiten, insbesondere Laser oder LEDs umfassen.

Die Detektoreinrichtung kann prinzipiell beliebiger Art sein, solange sie in zumindest einer Dimension, vorzugsweise in zwei Dimensionen, ein Probenbild aufnehmen kann. Zudem müssen ihre Detektorelemente so nah zueinander angeordnet sind, dass benachbarte Detektorelemente einen Abstand haben, welcher zwischen den Mittelpunkten der benachbarten Detektorelemente gemessen sein kann, der kleiner ist als 1 Airy. Hierzu kann jedes Detektorelement eine Lichtleitfaser umfassen, die Probenlicht zu einem lichtempfindlichen Element weiterleitet, beispielsweise zu einem Pixel eines Kamerachips oder zu einem Photoelektronenvervielfacher (Photomultiplier, PMT, englisch: photo multiplier tube). Prinzipiell kann auch jedes lichtempfindliche Element eines Kamerachips ein Detektorelement darstellen, ohne dass Lichtleitfasern verwendet werden. Weiterhin kann die Detektoreinrichtung auch mehrere Kameras umfassen.

Das von der Detektoreinrichtung zu messende Probenlicht ist Licht, welches in Folge der Bestrahlung der Probe mit Beleuchtungslicht von der Probe in Richtung der Detektoreinrichtung geworfen wird. Das Probenlicht kann je nach Messart Fluoreszenzlicht oder anderes Lumineszenzlicht umfassen oder auch reflektiertes oder gestreutes Beleuchtungslicht sein.

Bei einer bevorzugten Variante der Erfindung wird mit den berechneten Punktspreizfunktionen die Größe eines Messbereichs berechnet, der einen Bildpunkt des Gesamtbilds bestimmt. Der genannte Messbereich kann eine Messfläche oder auch ein Messvolumen sein.

Vorteilhafterweise wird hier eine absolut quantitative Auswertung des Gesamtbilds möglich. So können Absolutkonzentrationen von einer oder mehrerer Substanzen in den verschiedenen Messbereichen unter Verwendung der berechneten Größe eines Messbereichs berechnet werden. Hierzu ist als vorab gespeicherte Information bloß erforderlich, wie groß ein Messsignal für eine Referenzmolekülanzahl oder -dichte der fraglichen Substanz ist. Indem dieser Referenzwert mit dem Wert eines Bildpunkts des ermittelten Gesamtbilds verglichen wird, kann für den Messbereich dieses Bildpunkts die Dichte oder Gesamtzahl an Molekülen der fraglichen Substanz ermittelt werden.

Im Vergleich zu herkömmlichen Verfahren kann bei der Erfindung die Berechnung eines Gesamtbilds aus mehreren Probenbildern zu einer besseren Bildqualität oder einer höheren Auflösung führen, weil Informationen genutzt werden, in welcher Weise die verschiedenen Probenbilder miteinander zusammenhängen. Dadurch können Punktspreizfunktionen, die den Aufnahmen dieser Probenbilder zugrunde liegen, besonders exakt ermittelt werden, womit die verbesserte Bildqualität einhergeht. Zudem ermöglicht eine genaue Kenntnis der Punktspreizfunktion eine präzise Größenbestimmung eines untersuchten Probenbereichs.

## Patentansprüche

1. Verfahren zum Betreiben eines Scanmikroskops und zum Bestimmen von Punktspreizfunktionen, mit welchen mit dem Scanmikroskop Probenbilder aufgenommen werden,
   bei dem eine Probe mit mindestens einem Beleuchtungslichtstrahl abgetastet wird,
   bei dem während dem Abtasten durch den Beleuchtungslichtstrahl mit einer Detektoreinrichtung des Scanmikroskops mindestens ein Probenbild aufgenommen wird und
   bei dem aus dem mindestens einen Probenbild die Punktspreizfunktion berechnet wird, mit welcher durch das Scanmikroskop ein Probenbild aufgenommen wird,
   bei dem die Detektoreinrichtung Empfangselemente hat, deren Abstand zueinander kleiner ist als eine Beugungsscheibe, welche ein Probenpunkt auf der Detektoreinrichtung erzeugt,
   **dadurch gekennzeichnet,**
   **dass** über die Empfangselemente erzeugte Detektorsignale jeweils für verschiedene Positionen des Beleuchtungslichtstrahls auf der Probe ausgelesen werden, womit über die Abtastung der Probe die ausgelesenen Detektorsignale mehrere Probenbilder ergeben, wobei die Empfangselemente jeweils für verschiedene Positionen des Beleuchtungslichtstrahls ausgelesen werden, so dass nach der Abtastung jedes Empfangselement einen bestimmten Probenbereich untersucht hat,
   wobei die Punktspreizfunktionen zu den verschiedenen Detektorsignalen jeweils über eine Beleuchtungs-Punktspreizfunktion und eine Detektions-Punktspreizfunktion definiert sind,
   **dass** zu allen Detektorsignalen eine übereinstimmende Beleuchtungs-Punktspreizfunktion angenommen wird, die gemäß der Abtastbewegung für verschiedene Detektorsignale verschoben ist, und
   **dass** zu allen Detektorsignalen eine übereinstimmende Detektions-Punktspreizfunktion angenommen wird, in welcher ein räumlicher Versatz zwischen den Detektorelementen berücksichtigt wird, und
   **dass** mit den mehreren Probenbildern die Beleuchtungs-Punktspreizfunktion und die Detektions-Punktspreizfunktion berechnet werden und mit diesen die Punktspreizfunktionen zu den verschiedenen Detektorsignalen berechnet werden.

2. Verfahren nach Anspruch 1,
   **dadurch gekennzeichnet,**
   **dass** zusammen mit dem Berechnen der Punktspreizfunktionen aus den Probenbildern ein Gesamtbild berechnet wird.

3. Verfahren nach Anspruch 1 oder 2,
   **dadurch gekennzeichnet,**
   **dass** mit den berechneten Punktspreizfunktionen die Größe eines Messbereichs berechnet wird, der einen Bildpunkt des Gesamtbilds bestimmt.

4. Verfahren nach einem der Ansprüche 1 bis 3,
   **dadurch gekennzeichnet,**
   **dass** die Berechnung der Beleuchtungs-Punktspreizfunktion und der Detektions-Punktspreizfunktion dadurch erfolgt, dass eine Fitfunktion iterativ angepasst wird,
   wobei die Fitfunktion einen Zusammenhang der aufgenommenen Probenbilder zumindest zu der Beleuchtungs-Punktspreizfunktion, zu der Detektions-Punktspreizfunktion, zu dem jeweiligen Versatz zwischen der Beleuchtungs-Punktspreizfunktion und der Detektions-Punktspreizfunktion für die verschiedenen Detektorsignale und zu einer Probenfunktion beschreibt, welche ortsaufgelöst die Probe darstellt.

5. Verfahren nach Anspruch 4,
   **dadurch gekennzeichnet,**

**dass** die Fitfunktion einen iterativ anzupassenden Ausdruck, der die Beleuchtungs-Punktspreizfunktion beschreibt, und einen iterativ anzupassenden Ausdruck, der die Detektions-Punktspreizfunktion beschreibt, umfasst.

6. Verfahren nach Anspruch 5,
   **dadurch gekennzeichnet,**
   **dass** die beiden iterativ anzupassenden Ausdrücke jeweils durch Zernike-Polynome gebildet sind.

7. Verfahren nach Anspruch 5 oder 6,
   **dadurch gekennzeichnet,**
   **dass** als Startwerte für die beiden iterativ anzupassenden Ausdrücke eine theoretische Beleuchtungs-Punktspreizfunktion und eine theoretische Detektions-Punktspreizfunktion verwendet werden, welche vorab mit gegebenen Informationen zu optischen Abbildungsmitteln des Scanmikroskops bestimmt werden.

8. Verfahren nach einem der Ansprüche 1 bis 7,
   **dadurch gekennzeichnet,**
   **dass** eine theoretische Beleuchtungs-Punktspreizfunktion und eine theoretische Detektions-Punktspreizfunktion mit Hilfe von gegebenen Informationen zu optischen Abbildungsmitteln des Scanmikroskops bestimmt werden,
   **dass** Abweichungen von der theoretischen Beleuchtungs-Punktspreizfunktion zur berechneten Beleuchtungs-Punktspreizfunktion und von der theoretischen Detektions-Punktspreizfunktion zur berechneten Detektions-Punktspreizfunktion ermittelt werden und
   **dass** auf Grundlage der ermittelten Abweichungen Abbildungsfehler identifiziert werden.

9. Verfahren nach Anspruch 8,
   **dadurch gekennzeichnet,**
   **dass** in einem elektronischen Speicher Benutzeranweisungen zur Handhabung von Elementen des Scanmikroskops, auf die das Beleuchtungslicht oder von der Probe ausgehendes Probenlicht trifft, gespeichert sind,
   **dass** eine Zuordnung der Benutzeranweisungen zu verschiedenen Abbildungsfehlern gespeichert ist,
   **dass** mit elektronischen Auswertemitteln abhängig von identifizierten Abbildungsfehlern zugehörige Benutzeranweisungen ausgewählt und einem Benutzer ausgegeben werden.

10. Verfahren nach Anspruch 8 oder 9,
    **dadurch gekennzeichnet,**
    **dass** mit einer adaptiven Optik Abbildungsfehler des Scanmikroskops korrigierbar sind und
    **dass** mit elektronischen Steuer- und Auswertemitteln abhängig von den identifizierten Abbildungsfehlern die adaptive Optik zum Reduzieren von Abbildungsfehlern des Scanmikroskops verstellt wird.

11. Verfahren nach einem der Ansprüche 1 bis 10,
    **dadurch gekennzeichnet,**
    **dass** zum Ermitteln einer Höhenabhängigkeit der Punktspreizfunktionen eine weitere Mehrzahl an Probenbildern aufgenommen und daraus mindestens ein weiteres Gesamtbild berechnet wird,
    wobei sich die Messungen zu den verschiedenen Gesamtbildern in einem Höhenversatz zwischen der Beleuchtungs-Punktspreizfunktion und der Detektions-Punktspreizfunktion unterscheiden, und
    **dass** aus den mehreren Gesamtbildern die Höhenabhängigkeit der Punktspreizfunktionen berechnet wird.

12. Verfahren nach Anspruch 11,
    **dadurch gekennzeichnet,**
    **dass** die Probenbilder für die verschiedenen Gesamtbilder aufgenommen werden, ohne dass hierbei eine Höhenverstellung der Probe, einer Lichtquelleneinrichtung, welche das Beleuchtungslicht aussendet, oder der Detektoreinrichtung erfolgt, wozu

    - die Lichtquelleneinrichtung mindestens zwei Lichtquelleneinheiten aufweist, die in Ebenen angeordnet sind, welche zu verschiedenen Probenebenen optisch konjugiert sind, und/oder
    - die Detektoreinrichtung zwei Detektorbereiche umfasst, auf welche zwei verschiedene Probenebenen abgebildet werden.

13. Verfahren nach Anspruch 12,
    **dadurch gekennzeichnet,**
    **dass** die Probenbilder für ein erstes Gesamtbild gleichzeitig zu den Probenbildern für ein zweites Gesamtbild aufgenommen werden.

**14.** Verfahren nach einem der Ansprüche 1 bis 13,
**dadurch gekennzeichnet,**
**dass** jeweils ein Abtasten der Probe mit Beleuchtungslicht verschiedener Wellenlängenbereiche durchgeführt wird und/oder dass mit der Detektoreinrichtung von der Probe ausgehendes Probenlicht verschiedener Wellenlängenbereiche gemessen wird und
**dass** die zu berechnende Beleuchtungs-Punktspreizfunktion und/oder die zu berechnende Detektions-Punktspreizfunktion einen Parameter zur Beschreibung der Wellenlängenabhängigkeit der Beleuchtungs-Punktspreizfunktion und/oder der Detektions-Punktspreizfunktion umfasst.

**15.** Verfahren nach einem der Ansprüche 4 bis 14,
**dadurch gekennzeichnet,**
**dass** die Fitfunktion anzupassende Parameter enthält, welche die Anordnung der Detektorelemente zueinander beschreiben, insbesondere zum Bestimmen einer Bildvergrößerung, mit welcher eine Probenebene auf die Detektoreinrichtung abgebildet wird, und/oder zum Bestimmen einer Orientierung der Detektoreinrichtung relativ zur Abtastrichtung des Beleuchtungslichts.

**16.** Scanmikroskop
mit einer Lichtquelleneinrichtung zum Aussenden von mindestens einem Beleuchtungslichtstrahl,
mit einer Scaneinrichtung zum Erzeugen einer Abtastbewegung des mindestens einen Beleuchtungslichtstrahls über eine Probe,
mit einer Detektoreinrichtung zum Aufnehmen von mindestens einem Probenbild während dem Abtasten durch den Beleuchtungslichtstrahl,
mit elektronischen Steuer- und Auswertemitteln, die dazu eingerichtet sind, aus dem mindestens einen Probenbild eine Punktspreizfunktion zu berechnen, mit welcher ein Probenbild aufgenommen wird,
wobei die Detektoreinrichtung Empfangselemente hat, deren Abstand zueinander kleiner ist als eine Beugungsscheibe, welche ein Probenpunkt auf der Detektoreinrichtung erzeugt,
**dadurch gekennzeichnet,**
**dass** die elektronischen Steuer- und Auswertemitteln außerdem dazu eingerichtet sind, über die Empfangselemente erzeugte Detektorsignale jeweils für verschiedene Positionen des Beleuchtungslichtstrahls auf der Probe auszulesen, womit über die Abtastung der Probe die ausgelesenen Detektorsignale mehrere Probenbilder ergeben, wobei die Empfangselemente jeweils für verschiedene Positionen des Beleuchtungslichtstrahls ausgelesen werden, so dass nach der Abtastung jedes Empfangselement einen bestimmten Probenbereich untersucht hat,
wobei die Punktspreizfunktionen zu den verschiedenen Detektorsignalen jeweils über eine Beleuchtungs-Punktspreizfunktion und eine Detektions-Punktspreizfunktion definiert sind, und
**dass** die elektronischen Steuer- und Auswertemitteln dazu eingerichtet sind, mit den mehreren Probenbildern eine Beleuchtungs-Punktspreizfunktion und eine Detektions-Punktspreizfunktion zu berechnen und mit diesen die Punktspreizfunktionen zu den verschiedenen Detektorsignalen zu berechnen, unter den Annahmen, dass zu allen Detektorsignalen eine übereinstimmende Beleuchtungs-Punktspreizfunktion vorliegt, die gemäß der Abtastbewegung bei verschiedenen Detektorsignalen verschoben ist, und dass zu allen Detektorsignalen eine übereinstimmende Detektions-Punktspreizfunktion vorliegt, in welcher ein räumlicher Versatz zwischen den Detektorelementen berücksichtigt wird.

**Claims**

**1.** Method for operating a scanning microscope and for determining point spread functions with which sample images are recorded with the scanning microscope,
wherein a sample is scanned with at least one illumination light beam,
wherein at least one sample image is recorded using a detector device of the scanning microscope during the scanning by the illumination light beam, and
wherein the point spread function is calculated from the at least one sample image, a sample image being recorded by the scanning microscope with said point spread function,
wherein the detector device has reception elements, the spacing from one another of which is smaller than an Airy disk that a sample point generates on the detector device,
**characterized**
**in that** detector signals generated by way of the reception elements are each read for different positions of the illumination light beam on the sample, as a result of which the read detector signals yield a plurality of sample images by way of the scanning of the sample, wherein the reception elements are each read for different positions of the illumination beam path such that, following the scanning, each reception element has examined a certain sample region,

wherein the point spread functions for the different detector signals are defined in each case by way of an illumination point spread function and a detection point spread function,

**in that** a corresponding illumination point spread function is assumed for all detector signals, said illumination point spread function being shifted as per the scanning movement for various detector signals, and

**in that** a corresponding detection point spread function is assumed for all detector signals, a spatial offset between the detector elements being taken into account in said detection point spread function, and

**in that** the illumination point spread function and the detection point spread function are calculated from the plurality of sample images and the point spread functions for the different detector signals are calculated using said illumination point spread function and detection point spread function.

2. Method according to Claim 1,
   **characterized**
   **in that** an overall image is calculated from the sample images together with the calculation of the point spread functions.

3. Method according to Claim 1 or 2,
   **characterized**
   **in that** the size of a measurement region that determines a pixel of the overall image is calculated with the calculated point spread functions.

4. Method according to any one of Claims 1 to 3,
   **characterized**
   **in that** the calculation of the illumination point spread function and of the detection point spread function is implemented by virtue of a fit function being iteratively fitted,
   wherein the fit function describes a relationship of the recorded sample images at least in relation to the illumination point spread function, in relation to the detection point spread function, in relation to the respective offset between the illumination point spread function and the detection point spread function for the various detector signals and in relation to a sample function, which represents the sample in spatially resolved fashion.

5. Method according to Claim 4,
   **characterized**
   **in that** the fit function comprises an expression to be fitted iteratively that describes the illumination point spread function and an expression to be fitted iteratively that describes the detection point spread function.

6. Method according to Claim 5,
   **characterized**
   **in that** the two expressions to be fitted iteratively are each formed by Zernike polynomials.

7. Method according to Claim 5 or 6,
   **characterized**
   **in that** a theoretical illumination point spread function and a theoretical detection point spread function are used as initial values for the two expressions to be fitted iteratively, said theoretical point spread functions being determined in advance with information provided in respect of the optical imaging means of the scanning microscope.

8. Method according to any one of Claims 1 to 7,
   **characterized**
   **in that** a theoretical illumination point spread function and a theoretical detection point spread function are determined with the aid of information provided in respect of the optical imaging means of the scanning microscope,
   **in that** deviations between the theoretical illumination point spread function and the calculated illumination point spread function and between the theoretical detection point spread function and the calculated detection point spread function are ascertained and
   **in that** imaging aberration is identified on the basis of the ascertained deviations.

9. Method according to Claim 8,

**characterized**
**in that** user instructions for handling elements of the scanning microscope on which the illumination light or sample light emanating from the sample is incident are stored in an electronic memory, in that an assignment is stored between the user instructions and various imaging aberrations, and in that the associated user instructions are selected on the basis of identified imaging aberrations and output to a user by way of electronic evaluation means.

10. Method according to Claim 8 or 9,
**characterized**
**in that** imaging aberrations of the scanning microscope are correctable by means of an adaptive optical unit and
**in that** the adaptive optical unit is adjusted by electronic control and evaluation means so as to reduce imaging aberrations of the scanning microscope on the basis of the identified imaging aberrations.

11. Method according to any one of Claims 1 to 10,
**characterized**
**in that** a further plurality of sample images are recorded and at least one further overall image is calculated therefrom for the purposes of ascertaining a height dependence of the point spread functions,
wherein the measurements in respect of the various overall images differ by way of a height offset between the illumination point spread function and the detection point spread function, and
**in that** the height dependence of the point spread functions is calculated from the plurality of overall images.

12. Method according to Claim 11,
**characterized**
**in that** the sample images for the various overall images are recorded without a height adjustment of the sample, of a light source device that emits the illumination light or of the detector device being implemented in the process, for the purposes of which

- the light source device comprises at least two light source units that are disposed in planes that are optically conjugate to various sample planes and/or
- the detector device comprises two detector regions, on which two different sample planes are imaged.

13. Method according to Claim 12,
**characterized**
**in that** the sample images for a first overall image are recorded at the same time as the sample images for a second overall image.

14. Method according to any one of Claims 1 to 13,
**characterized**
**in that** the sample is scanned with illumination light of different wavelength regions and/or in that sample light of different wavelength regions emanating from the sample is measured by the detector device and
**in that** the illumination point spread function to be calculated and/or the detection point spread function to be calculated comprises a parameter for describing the wavelength-dependence of the illumination point spread function and/or the detection point spread function.

15. Method according to any one of Claims 4 to 14,
**characterized**
**in that** the fit function contains parameters to be fitted, which parameters describe the arrangement of the detector elements in relation to one another, in particular for the purposes of determining an image magnification, with which a sample plane is imaged on the detector device, and/or for determining an orientation of the detector device relative to the scanning region direction of the illumination light.

16. Scanning microscope
comprising a light source device for emitting at least one illumination light beam,
comprising a scanning device for producing a scanning movement of the at least one illumination light beam over a sample,
comprising a detector device for recording at least one sample image while scanning with the illumination light beam,
comprising electronic control and evaluation means, which are configured to calculate a point spread function, with which a sample image is recorded, from the at least one sample image,
wherein the detector device comprises receiver elements, the distance of which from one another is smaller than an Airy disk produced by a sample point on the detector device,
**characterized**
**in that** the electronic control and evaluation means are moreover configured to read, via the receiver elements, generated detection signals, in each case for different positions of the illumination light beam on the sample, wherein, by way of the scanning of the sample, the read detector signals yield a plurality of sample images, wherein the receiver elements are each read for various positions of the illumination light beam such that, following the scanning, each receiver element has examined a certain sample region,
wherein the point spread functions for the various detector signals are each defined by way of an illumination point spread function and a detection point spread function, and
**in that** the electronic control and evaluation means are configured to calculate an illumination point spread function and a detection point spread function using the plurality of sample images and to calculate, using said point spread functions, the point spread functions for the various detector signals under the assumption that a corresponding illumination point spread function is present for all detector signals, which is displaced in the various detector signals in accordance with the scanning motion, and that a corresponding detection point spread function is present for all detector signals, which takes into account a spatial offset between the detector elements.

### Revendications

1. Procédé permettant de faire fonctionner un microscope à balayage et de déterminer des fonctions d'étalement ponctuel avec lesquelles des images d'un échantillon sont acquises au moyen du microscope à balayage,
procédé selon lequel un échantillon est balayé par au moins un faisceau lumineux d'éclairage,
selon lequel au moins une image de l'échantillon est acquise par un dispositif de détection du microscope à balayage pendant le balayage par le faisceau lumineux d'éclairage et
selon lequel la fonction d'étalement ponctuel avec laquelle une image de l'échantillon est acquise par le microscope à balayage est calculée à partir de ladite au moins une image de l'échantillon,
selon lequel le dispositif de détection comporte des éléments de réception séparés les uns des autres d'une distance plus petite qu'une tache de diffraction qui produit un point échantillon sur le dispositif de détection,
**caractérisé en ce que**
des signaux de détection produits par l'intermédiaire des éléments de réception sont respectivement lus pour différentes positions du faisceau lumineux d'éclairage sur l'échantillon, les signaux de détection lus donnant plusieurs images de l'échantillon au cours du balayage de l'échantillon, dans lequel les éléments de réception sont respectivement lus pour différentes positions du faisceau lumineux d'éclairage, de sorte qu'après le balayage, chaque élément de réception a analysé une zone déterminée de l'échantillon,
dans lequel les fonctions d'étalement ponctuel pour les différents signaux de détection sont respectivement définies par une fonction d'étalement ponctuel d'éclairage et une fonction d'étalement ponctuel de détection,
**en ce qu'**on suppose, pour tous les signaux de détection, une fonction d'étalement ponctuel d'éclairage correspondante qui est décalée selon le mouvement de balayage pour différents signaux de détection, et
**en ce qu'**on suppose en outre, pour tous les signaux de détection, une fonction d'étalement ponctuel de détection correspondante dans laquelle est pris en compte un décalage spatial entre les éléments de détection, et
**en ce que** la fonction d'étalement ponctuel d'éclairage et la fonction d'étalement ponctuel de détection sont calculées au moyen des multiples images de l'échantillon et que les fonctions d'étalement ponctuel sont calculées à partir de celles-ci pour les différents signaux de détection.

2. Procédé selon la revendication 1,
**caractérisé en ce qu'**une image globale est calculée conjointement avec le calcul des fonctions d'étalement ponctuel à partir des images de l'échantillon.

3. Procédé selon la revendication 1 ou 2,
**caractérisé en ce que** la taille d'une plage de mesure qui détermine un pixel de l'image globale est calculée à partir des fonctions d'étalement ponctuel calculées.

4. Procédé selon l'une des revendications 1 à 3,
**caractérisé en ce que** le calcul de la fonction d'étalement ponctuel d'éclairage et de la fonction d'étalement ponctuel de détection est effectué par ajustement itératif d'une fonction d'ajustement,
dans lequel la fonction d'ajustement décrit une relation des images acquises de l'échantillon au moins avec la fonction d'étalement ponctuel d'éclairage, avec la fonction d'étalement ponctuel de détection, avec le décalage respectif entre la fonction d'étalement ponctuel d'éclairage et la fonction d'étalement ponctuel de détection pour les différents signaux de détection et avec une fonction d'échantillon qui représente l'échantillon de manière spatialement résolue.

5. Procédé selon la revendication 4,
**caractérisé en ce que** la fonction d'ajustement comprend une expression devant être ajustée de manière itérative qui décrit la fonction d'étalement ponctuel d'éclairage, et une expression devant être ajustée de manière itérative qui décrit la fonction d'étalement ponctuel de détection.

6. Procédé selon la revendication 5,
**caractérisé en ce que** les deux expressions devant être ajustées de manière itérative sont respectivement formées par des polynômes de Zernike.

7. Procédé selon la revendication 5 ou 6,
**caractérisé en ce qu'**une fonction d'étalement ponctuel d'éclairage théorique et une fonction d'étalement ponctuel de détection théorique sont utilisées pour les deux expressions devant être ajustées de manière itérative en tant que valeurs initiales qui sont déterminées préalablement à partir d'informations fournies concernant des moyens optiques d'imagerie du microscope à balayage.

8. Procédé selon l'une des revendications 1 à 7,
**caractérisé en ce qu'**une fonction d'étalement ponctuel d'éclairage théorique et une fonction d'étalement ponctuel de détection théorique sont déterminées à partir d'informations fournies concernant des moyens optiques d'imagerie du microscope à balayage,
**en ce que** des écarts entre la fonction d'étalement ponctuel d'éclairage théorique et la fonction d'étalement ponctuel d'éclairage calculée et entre la fonction d'étalement ponctuel de détection théorique et la fonction d'étalement ponctuel de détection calculée sont déterminés et
**en ce que** des erreurs d'imagerie sont identifiées sur la base des écarts ainsi déterminés.

9. Procédé selon la revendication 8,
**caractérisé en ce que** des instructions d'utilisateur concernant la manipulation d'éléments du microscope à balayage, sur lequel est incidente la lumière d'éclairage ou la lumière provenant de l'échantillon, sont stockées dans une mémoire électronique,
**en ce qu'**une association entre des instructions d'utilisateur et différentes erreurs d'imagerie est stockée, et
**en ce que** des instructions d'utilisateur correspondantes sont sélectionnées à l'aide de moyens d'analyse électroniques en fonction d'erreurs d'imagerie identifiées et sont délivrées à un utilisateur.

10. Procédé selon la revendication 8 ou 9,
**caractérisé en ce que** des erreurs d'imagerie du microscope à balayage peuvent être corrigées par une optique adaptative et
**en ce que** l'optique adaptative est réglée par des moyens électroniques de commande et d'analyse en fonction des erreurs d'imagerie identifiées afin de réduire les erreurs d'imagerie du microscope à balayage.

11. Procédé selon l'une des revendications 1 à 10,
**caractérisé en ce que**, pour déterminer une dépendance en hauteur des fonctions d'étalement ponctuel, une autre pluralité d'images de l'échantillon est acquise et au moins une autre image globale est calculée à partir de celles-ci, dans lequel les mesures des différentes images globales diffèrent par un décalage de hauteur entre la fonction d'étalement ponctuel d'éclairage et la fonction d'étalement ponctuel de détection, et
**en ce que** la dépendance en hauteur des fonctions d'étalement ponctuel est calculée à partir de la pluralité d'images globales.

12. Procédé selon la revendication 11,
**caractérisé en ce que** les images de l'échantillon sont acquises pour les différentes images globales sans effectuer de réglage en hauteur de l'échantillon, d'un dispositif formant source lumineuse émettant la lumière d'éclairage, ou du dispositif de détection,

- le dispositif formant source lumineuse comprenant à cet effet au moins deux unités formant sources lumineuses disposées dans des plans optiquement conjugués par rapport à différents plans d'échantillon, et/ou
- le dispositif de détection comprenant à cet effet deux zones de détection sur lesquelles sont formées les images de deux plans d'échantillon différents.

**13.** Procédé selon la revendication 12,
**caractérisé en ce que** les images de l'échantillon destinées à une première image globale sont acquises en même temps que les images de l'échantillon destinées à une seconde image globale.

**14.** Procédé selon l'une des revendications 1 à 13,
**caractérisé en ce qu'**un balayage de l'échantillon est respectivement effectué avec une lumière d'éclairage se situant dans différentes plages de longueur d'onde, et/ou en ce que la lumière provenant de l'échantillon est mesurée dans différentes plages de longueurs d'onde à l'aide du dispositif de détection et
**en ce que** la fonction d'étalement ponctuel d'éclairage à calculer et/ou la fonction d'étalement ponctuel de détection à calculer comprend un paramètre destiné à décrire la dépendance en longueur d'onde de la fonction d'étalement ponctuel d'éclairage et/ou de la fonction d'étalement ponctuel de la détection.

**15.** Procédé selon l'une des revendications 4 à 14,
**caractérisé en ce que** la fonction d'ajustement contient des paramètres à ajuster qui décrivent la disposition des éléments de détection les uns par rapport aux autres, en particulier pour déterminer un grossissement d'image avec lequel l'image d'un plan d'échantillon est formée sur le dispositif de détection et/ou pour déterminer une orientation du dispositif de détection par rapport à la direction de balayage de la lumière d'éclairage.

**16.** Microscope à balayage comportant
une source lumineuse destinée à émettre au moins un faisceau lumineux d'éclairage,
un dispositif de balayage destiné à produire un mouvement de balayage dudit au moins un faisceau lumineux d'éclairage sur un échantillon,
un dispositif de détection destiné à acquérir au moins une image de l'échantillon pendant le balayage par le faisceau lumineux d'éclairage,
des moyens électroniques de commande et d'analyse qui sont conçus pour calculer à partir de ladite au moins une image de l'échantillon une fonction d'étalement ponctuel avec laquelle est acquise une image de l'échantillon,
dans lequel le dispositif de détection comporte des éléments de réception séparés les uns des autres d'une distance plus petite qu'une tache de diffraction qui produit un point échantillon sur le dispositif de détection,
**caractérisé en ce que** les moyens électroniques de commande et d'analyse sont en outre conçus pour lire des signaux de détection respectivement produits par l'intermédiaire des éléments de réception pour différentes positions du faisceau lumineux d'éclairage sur l'échantillon, les signaux de détection lus donnant plusieurs images de l'échantillon au cours du balayage de l'échantillon, dans lequel les éléments de réception sont respectivement lus pour différentes positions du faisceau lumineux d'éclairage, de sorte qu'après le balayage, chaque élément de réception a analysé une zone déterminée de l'échantillon,
dans lequel les fonctions d'étalement ponctuel pour les différents signaux de détection sont respectivement définies par une fonction d'étalement ponctuel d'éclairage et une fonction d'étalement ponctuel de détection, et
**en ce que** les moyens électroniques de commande et d'analyse sont conçus pour calculer une fonction d'étalement ponctuel d'éclairage et une fonction d'étalement ponctuel de détection au moyen des multiples images de l'échantillon et pour calculer les fonctions d'étalement ponctuel à partir de celles-ci pour les différents signaux des détection, en supposant que, pour tous les signaux de détection, il existe une fonction d'étalement ponctuel d'éclairage correspondante qui est décalée selon le mouvement de balayage pour différents signaux de détection, et que, pour tous les signaux de détection, il existe une fonction d'étalement ponctuel de détection correspondante, dans laquelle est pris en compte un décalage spatial entre les éléments de détection.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011114500 A1
- US 2010329582 A1

**In der Beschreibung aufgeführte Nicht-Patentliteratur**

- **VON CONCHELLO J et al.** *Proceedings of SPIE,* 01. Januar 1996, vol. 2655
- **VON PRAVEEN PANKAJAKSHAN.** *Parametric Blind Deconvolution for Confocal Laser Scanning Microscopy (CLSM)-Proof of Concept*
- **SHEPPARD et al.** *Optik,* 1982, vol. 80 (2), 53
- **VON SROUBEK et al.** *Journal of Physics, Conference Series,* 2008, 124